(19) Europäisches Patentamt
European Patent Office
Office européen des brevets

(11) EP 0 507 531 B1

(12) **EUROPEAN PATENT SPECIFICATION**

(45) Date of publication and mention
of the grant of the patent:
**05.06.1996 Bulletin 1996/23**

(51) Int Cl.⁶: **G05B 19/416**

(21) Application number: **92302778.3**

(22) Date of filing: **30.03.1992**

(54) **Method and apparatus for generating acceleration and deceleration patterns for robot control**

Methode und Vorrichtung zur Erzeugung von Bahnbeschleunigungs- und Verzögerungsmustern für die Robotersteuerung

Méthode et dispositif pour la génération des ensembles de signaux d'accélération et de décélération pour le contrôle d'un robot

(84) Designated Contracting States:
**DE FR GB**

(30) Priority: **03.04.1991 JP 96089/91**

(43) Date of publication of application:
**07.10.1992 Bulletin 1992/41**

(73) Proprietor: **SONY CORPORATION
Tokyo (JP)**

(72) Inventor: **Itoh, Ietoshi
Shinagawa-ku, Tokyo (JP)**

(74) Representative: **Nicholls, Michael John et al
J.A. KEMP & CO.
14, South Square
Gray's Inn
London WC1R 5LX (GB)**

(56) References cited:
**EP-A- 0 191 103      EP-A- 0 262 600
EP-A- 0 268 491      EP-A- 0 333 867
US-A- 4 864 205**

## Description

The present invention relates to a method and an apparatus for generating acceleration and deceleration patterns for control of a robot in a servo system which is equipped with a plurality of driving axes so constituted as to mutually exert dynamic interference, in a manner to shorten the required time of movement by such patterns adequate to draw out the maximum power from a driving source.

One of the effective indexes in examining the kinetic capability of a robot is working tact time. It is considered preferable that the tact time is shortened to a minimum and also that vibration is minimized.

Some methods have been known heretofore for minimizing the tact time, and one of them is carried out by optimizing an acceleration-deceleration curve relative to a servo system.

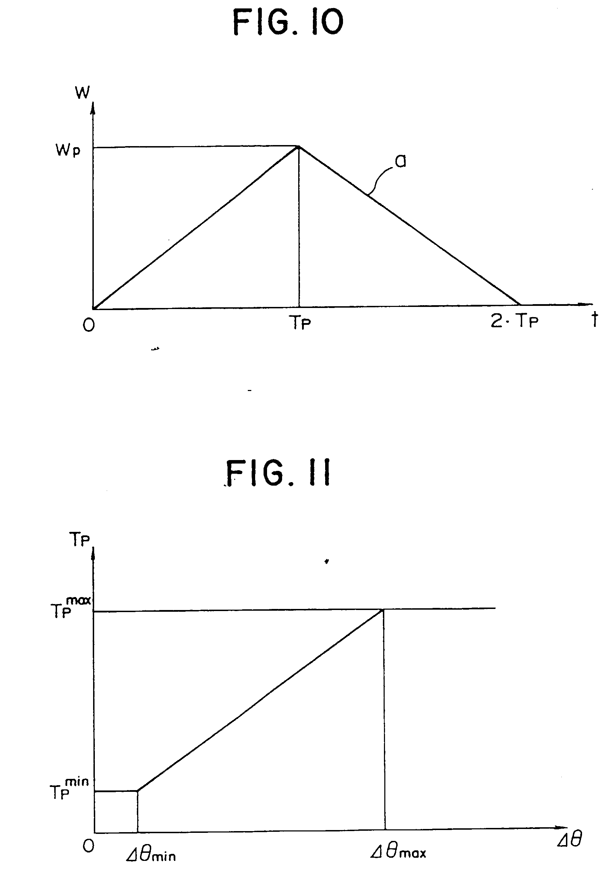

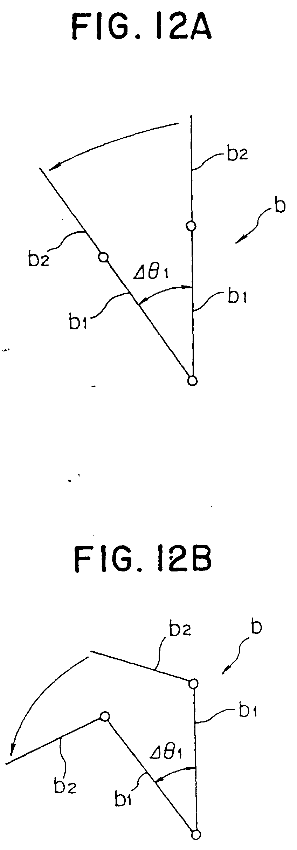

First, with reference to Figs. 10 and 11 of the accompanying drawings, a brief description will be given on the exemplary method proposed by the present applicant as disclosed in Japanese Patent Application No. Hei 2 (1990)-283867.

Denoted by $\underline{a}$ in Fig. 10 is an acceleration-deceleration curve, where the time required for the velocity $\omega$ to reach its peak value $(\omega p)$ from an acceleration start instant $(t = 0)$ is termed "peak time" (hereinafter abbreviated to Tp), and in contrast with an acceleration pattern until such peak time, a deceleration pattern is obtained by execution of a temporal reflection with respect to $t = Tp$.

The acceleration-deceleration curve $\underline{a}$ is determined by changing the peak time Tp in accordance with the displacement.

More specifically, as shown in Fig. 11, there is previously prescribed the characteristic with respect to the displacement $(\Delta\theta)$ and the peak. time Tp, and in generating acceleration and deceleration patterns, first an acceleration pattern is generated in such a manner that the time required for the velocity to reach the peak value from the acceleration start point is equal to the peak tine indicated for the displacement, and thereafter a deceleration pattern is generated by the technique of temporal symmetrization.

Although the method mentioned above is considered to be sufficiently effective in a servo system where no mutual dynamic interference exists between a plurality of driving axes as in an orthogonal type robot, there arises the following problem in the case of applying such method to a multiaxial scalar type robot.

Fig. 12 schematically shows the motion of a biaxial scalar type robot $\underline{b}$. In this robot, a second arm b2 is connected rotatably to the fore end of a first arm b1.

In Fig. 12, (a) represents an aspect after a rotation of an angle $\Delta\theta1$ in a state where the two armb b1 and b2 are linearly extended, and (b) represents another aspect after a rotation of an angle $\Delta\theta1$ in a state where the second arm b2 is bent to the first arm b1. In either case, the rotation angle $\Delta\theta2$ of the second arm b2 is zero.

As will be understood with careful observation of the motions of both arms, the control aspect is different depending on the relationship between the arms b1 and b2. Regarding the moment of inertia at the center of rotation of the first arm b1, the moment in the aspect (a) is greater than that in the aspect (b), so that a greater power is needed in the former although the two motions have the same displacement $\Delta\theta1$, and also a longer time is required until a halt.

However, if the acceleration and deceleration patterns for each arm are generated with the same idea as that for an orthogonal type robot in disregard of such circumstances, it follows that the same peak time Tp is employed in both operations of Figs. 12(a) and 12(b).

Therefore, the robot $\underline{b}$ is actuated with a great Tp value though a smaller value is sufficient in the case of Fig. 12 (b), whereby the tact time (2.Tp) is rendered longer than necessary.

In an attempt to eliminate such a disadvantage, there may be contrived a means of changing the peak time Tp in accordance with the displacements $\Delta\theta1$ and $\Delta\theta2$ of the arms.

However, determination of such change requires experience, which is disadvantageously dependent upon the experience of an operator concerned and his ability. And even if a satisfactory result is attained, there still remains a problem that confidence in achieving the best selective setting is not exactly achievable, or some exceptional process may be needed in case the operation fails to completely meet the requirements.

For example, it may be possible to contrive a method of first dividing the operation into some probable cases, then finding optimal Tp values on the basis of experimental data in the individual cases, subsequently writing the optimal values in ROMs or the like, and using such values as references in generating acceleration and deceleration patterns. However, complicated work is unavoidable for attaining complete storage in the ROMs, and such experimental data are needed in the development of every new robot.

It is therefore an object of the present invention to provide an improvement which is capable of generating acceleration and deceleration patterns by dynamically analyzing the motion of a robot, then representing the mutual interference of arms by logical expressions, and calculating a proper peak time therefrom with regard to the motion.

US-A-4 864 205 discloses a system, on which the precharacterising portion of claim 1 is based, for minimizing tact time by performing kinematic analysis of the robot arms. The acceleration, slew and deceleration times are equalized. EP-A-268 491 discloses a similar system in which the times are calculated from preset curves. EP-A-262 600 and EP-A-0 333 867 disclose systems for multiaxial robot control in which the torque provided from each motor is maximized and EP-A-191 103 discloses maximizing the torque of at least one part using a preset acceleration and deceleration curve.

According to the present invention, there is provided a method of generating acceleration and deceleration patterns for a servo system so constituted as to exert dynamic interference from the motion of one driving axis to that of another driving axis, in such a manner that a synchronism is attained at acceleration start points, velocity peak points and deceleration end points in the acceleration and deceleration patterns for the individual driving axes, said method comprising the steps of:

setting dynamic parameters specific to the servo system, then designating the start and end positions of each displacement with respect to the dynamic parameters, and expressing the dynamic parameters as functions of the peak time required for the velocity to reach its peak in the acceleration-deceleration patterns; calculating the peak time; and

generating an acceleration pattern relative to each driving axis in such a manner that the time required for the velocity to reach its peak point from the acceleration start point becomes equal to the calculated peak time, then performing temporal symmetrisation with respect to said acceleration pattern to thereby generate a temporally reflected deceleration pattern;

characterised by

setting the dynamic parameters by dynamically analysing the motion of the servo system;

calculating the kinetic energy, which is required for the displacement, as a function of the peak time on the basis of the dynamic constants and the dynamic parameters, and ascribing each of the energy terms in that function to one of the driving sources (8) for the axes;

calculating respective peak time values by setting the sum of the energy terms ascribed to each respective driving source (8) equal to the maximum power value allowable by the driving source (8); and

selecting, as the peak time of said servo system, the maximum of the peak time values so calculated.

The invention also provides corresponding apparatus for generating patterns according to the method above.

According to the present invention, the acceleration and deceleration patterns can be optimized by modelling the servo system, in regard to the mutual dynamic interference of arms, with logical expressions on the basis of the energy expressions, the power of the driving source and the power distribution, and then calculating the optimal value of the peak time Tp, hence reducing the tact time by efficiently utilizing the power of the driving source.

Its algorithm is logically definite, and there exists no room left for the designer's ability or experience to intervene in this point. Furthermore it becomes possible to save the customary labor needed heretofore for acquiring huge individual experimental data relative to each robot and utilizing such data for control.

The present invention will be further described by way of non-limitative example with reference to the illustrative accompanying drawings, in which:-

Fig. 1 is a block diagram of an acceleration-deceleration pattern generating apparatus embodying the present invention;

Fig. 2 is a flow chart of an algorithm executed by the acceleration-deceleration pattern generating method of the present invention;

Fig. 3 shows a modeled typical motion of a biaxial scalar type robot;

Fig. 4 graphically shows an exemplary acceleration-deceleration curve;

Fig. 5 is a schematic diagram showing the configuration of a motor driving circuit;

Fig. 6 is an equivalent circuit diagram relative to the motor driving circuit;

Fig. 7 is a plan view showing the structure of a biaxial scalar type robot;

Fig. 8 is a conceptual diagram showing distributions of energy and power;

Fig. 9 is a two-dimensional graphic representation showing the power of each driving motor to explain a control state;

Fig. 10 graphically shows an example of generating acceleration and deceleration patterns with respect to one driving axis;

Fig. 11 graphically shows the relationship between a displacement and a peak time; and

Fig. 12 schematically shows the motion of a biaxial scalar type robot to explain the known problems, in which (a) represents an aspect where arms are rotated in a state of linear full extension, and (b) represents another aspect where the arms are rotated in a bent state. .

Prior to describing the constitution of the acceleration-deceleration pattern generating apparatus of the present invention, an explanation will first be given on the principle of the invention, which is based on physical analysis, with reference to an exemplary biaxial scalar type robot to be controlled.

In the present invention, the operation of a robot is dynamically analyzed, and mutual interference of arms (to exert influence of the motion of one arm upon that of the other) is represented by logical expressions, which are then utilized for determining the peak time Tp so as to finally shorten the tact time.

Fig. 3 shows a modeled typical motion of a biaxial scalar type robot, wherein a first arm b1 is rotated on an origin O of X-Y orthogonal coordinates, while a second arm b2 is rotated on a rotational end (point O′) of the first arm b1.

The parameters and so forth of the two arms b1 and b2 are defined as listed in Table 1 below.

TABLE 1

| Definitions of Parameters, etc. | |
|---|---|
| Symbol | Meaning |
| P1 | Position of inertial center of first arm |
| P2 | Position of inertial center of second arm |
| L1 | Length of first arm |
| G1 | Distance from origin O to point P1 ($\overline{OP1}$) |
| L2 | Length of second arm |
| G2 | Distance from point O' to point P2 ($\overline{OP2}$) |
| θ1 | Angle formed by center axis of first arm with X-axis |
| θ2 | Angle formed by center axis of second arm with that of first arm |
| M1 | Mass of first arm |
| M2 | Mass of second arm |
| I1 | Inertia moment of first arm (around P1) |
| I2 | Inertia moment of second arm (around P2) |

It is to be noted that the angle parameter θ2 is not based on the angle formed by the center axis of the second arm b2 with the X-axis, but on the measured angle formed in the X-Y plane by the center axis of the second arm b2 with that of the first arm b1.

In the following description of dynamic analysis, the robot system is idealized by adopting the assumption and approximation, which will be listed below, so as not to complicate the contents of the explanation unnecessarily.

(1) None of viscosity term is supposed to be existent.
(2) Each arm is supposed to be movable exactly in accordance with any command value for servo control.
(3) The energy turned into heat and dissipated is supposed to be negligibly little, and it is ignored.
(4) In the acceleration-deceleration curve used here, an acceleration pattern and a deceleration pattern are symmetrized by temporal reflection.
(5) The power consumption of an arm driving motor during acceleration and that during deceleration are supposed to be equal to each other.

First the kinetic energy in the robot system shown in Fig. 3 is calculated. In Fig. 3, points P1 and P2 are represented by polar coordinates where the X-Y coordinates are regarded as a complex plane (in which the Y-axis is selected as an imaginary axis). Then the position of each point can be expressed as

$$P1=G1 \cdot \exp(i \cdot \theta1)$$

$$P2=L1 \cdot \exp(i \cdot \theta1)+G2 \cdot \exp[i \cdot (\theta1+\theta2)] \qquad (1)$$

EP 0 507 531 B1

where i denotes a unit of imaginary number.

For calculating the velocities at the points P1 and P2, linear differentiation is executed with the time t as given by

$$\frac{dP1}{dt}=G1\cdot\frac{d\theta1}{dt}\cdot\exp\left[i\cdot(\theta1+\frac{\pi}{2})\right]$$

$$\frac{dP2}{dt}=L1\cdot\frac{d\theta1}{dt}\cdot\exp\left[i\cdot(\theta1+\frac{\pi}{2})\right]+G2\cdot(\frac{d\theta1}{dt}+\frac{d\theta2}{dt})\cdot\exp\left[i\cdot(\theta1+\theta2+\frac{\pi}{2})\right]$$

$$\cdots\cdots (2)$$

The kinetic energy E(a11) of the entire system is the sum of the translational kinetic energy relative to the arms b1, b2 and the rotational energy around each centroid, as given by

$$E(all)=\frac{1}{2}\cdot M1\cdot\left|\frac{dP1}{dt}\right|^{2}+\frac{1}{2}\cdot I1\cdot\left(\frac{d\theta1}{dt}\right)^{2}+\frac{1}{2}\cdot M2\cdot\left|\frac{dP2}{dt}\right|^{2}+\frac{1}{2}\cdot I2\cdot\left(\frac{d\theta1}{dt}+\frac{d\theta2}{dt}\right)^{2}$$

$$\cdots\cdots (3)$$

On the right side of Eq. (3), the first term corresponds to the translational kinetic energy of the first arm b1, the second term to the rotational energy around the point P1, the third term to the translational kinetic energy of the second arm b2, and the fourth term to the rotational energy around the point P2, respectively.

The values relative to the terms including the linear differentials of the points P1 and P2 with the time are squares of the absolute values thereof, signifying that the linear differential terms are multiplied by the respective complex conjugates, whereby each term is turned into a real number. (This process is necessary due to the result of regarding the X-Y coordinate system as a complex plane.)

Arranging Eq. (3) by substituting Eq. (2) for its right side, the energy E (all) is rewritten as

$$E(all)=\frac{1}{2}\cdot(A1+A2\cdot\cos\theta2)\cdot(\omega1)^{2}+\frac{1}{2}\cdot B1\cdot(\omega2)^{2}+\frac{1}{2}\cdot(C1+C2\cdot\cos\theta2)\cdot\omega1\cdot\omega2 \qquad (4)$$

$$\omega1=\frac{d\theta1}{dt}$$

$$\omega2=\frac{d\theta2}{dt}$$

$$A1=M1\cdot G1^{2}+I1+M2\cdot L1^{2}+M2\cdot G2^{2}+I2$$

$$A2=2\cdot M2\cdot L1\cdot G2$$

$$B1=M2\cdot G2^{2}+I2$$

$$C1=2\cdot M2\cdot G2^{2}+2\cdot I2=2\cdot B1$$

$$C2=2\cdot M2\cdot L1\cdot G2=A2 \qquad (5)$$

As expressed by Eq. (5), the time differentials per rotation with respect to the angle parameters $\theta1$, $\theta2$ are defined as angular velocities $\omega1$, $\omega2$ respectively. And it is understood that the energy E(all) can be divided, by using such differentials, into three terms, i.e., a square term of the velocity $\omega1$, a square term of the velocity $\omega2$, and a term of the product of the velocities $\omega1$ and $\omega2$.

Eq. (4) represents the energy of the entire system when the first arm b1 is moved at the angular velocity $\omega1$ while the second arm b2 is moved at the angular velocity $\omega2$ up to the position with $\theta2$.

The constants (A1, A2, B1, C1, C2) in Eq. (5) are the values specific to the robot system.

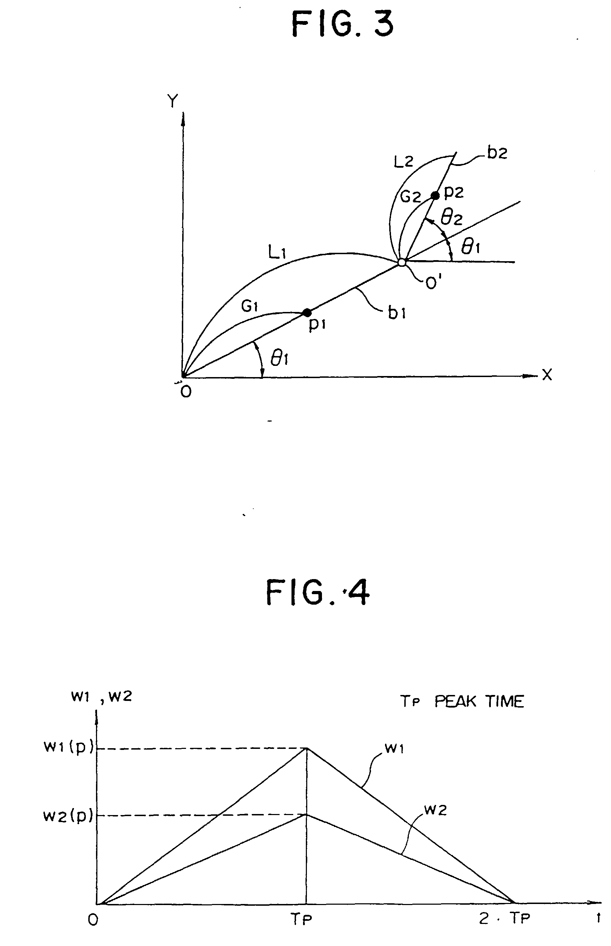

For the purpose of simplifying the explanation, there is considered here a triangular pattern of Fig. 4 as an acceleration-deceleration curve for controlling the motions of the arms b1 and b2.

In a graphic representation where the angular velocities $\omega1$, $\omega2$ are taken along the ordinate and the time t along the abscissa, one pattern is such that the velocity $\omega1$ rises from the origin with a fixed inclination (acceleration = fixed) and, after reaching the peak value $\omega1(P)$ at a point $t = Tp$, decelerates with a fixed inclination and comes to a halt at a point $t = 2\cdot Tp$. Meanwhile, another pattern is such that the velocity $\omega2$ rises with a fixed inclination from the origin

5

and, after reaching the peak value $\omega 2(P)$ at the point $t = Tp$, then decelerates and comes to a halt at the point $t = 2 \cdot Tp$.

Thus, each pattern is linearly symmetrical with respect to the point $t = Tp$, and the acceleration pattern and the deceleration pattern are so formed as to be mutually superposed by temporal reflection. Both arms are retained- in synchronism with each other relative to the acceleration start point, the peak point ($t = Tp$) of the angular velocity, and the halt point (or deceleration end point).

The energy $E(all:P)$ of the entire system at the peak point ($t = Tp$) of the angular velocity in such acceleration and deceleration patterns is obtained by substituting $\omega 1 = \omega 1(P)$, $\omega 2 = \omega 2(P)$ and $\theta 2 = \theta 2(P)$ (value of $\theta 2$ at $t = Tp$) for Eq. (4), and it is calculated as

$$E(all:P) = \frac{1}{2} \cdot (A1 + A2 \cdot \cos \theta 2(P)) \cdot [\omega 1(P)]^2$$

$$+ \frac{1}{2} \cdot B1 \cdot [\omega 2(P)]^2 + \frac{1}{2} \cdot [C1 + C2 \cdot \cos \theta 2(P)] \cdot \omega 1(P) \cdot \omega 2(P) \tag{6}$$

Thus, Eq. (6) represents the dynamic entire energy $E(all:P)$ when the angular velocities $\omega 1$, $\omega 2$ have reached the respective peak values $\omega 1(P)$, $\omega 2(P)$ simultaneously, and such energy $E(all:P)$ is supplied naturally from the arm driving mechanism.

When the robot system proceeds to the deceleration from the point $t = Tp$ where the energy $E(all:P)$ is retained, if the arm driving mechanism is so designed as to be capable of reusing such energy, it becomes possible, by utilizing such energy, to operate the robot system from the deceleration start point to the halt without the necessity of supplying any new energy (on condition that any loss derived from the friction is neglected).

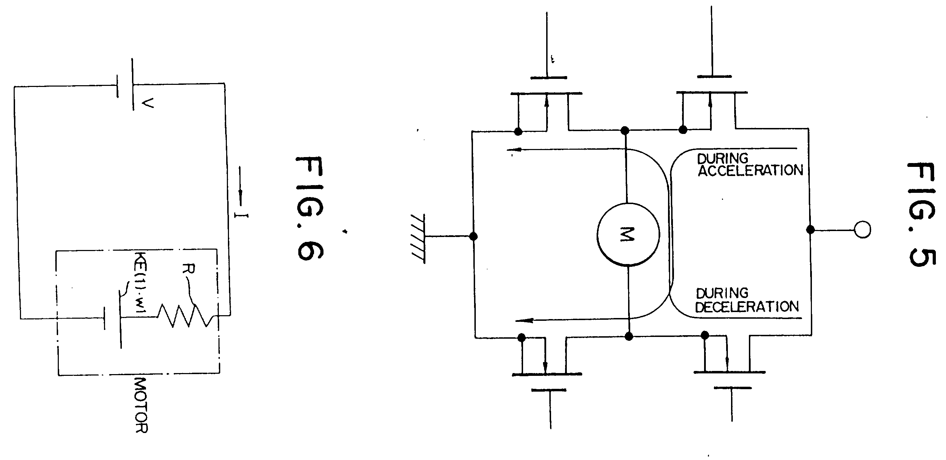

In any practical driving mechanism, however, such reuse of the energy is impossible and, on the contrary, some energy substantially equal to $E(all:P)$ is consumed at the time of deceleration. For example, in a bridge type motor driving circuit of Fig. 5, energy substantially equal to the above is consumed at each time of acceleration and deceleration.

It follows that double the energy $E(all:P)$ is required for the robot system in the stages of acceleration and deceleration.

Accordingly, with reference to the total power W of the motors to drive the arms b1 and b2, the energy $W \cdot (2 \cdot Tp)$ supplied during the time up to $2 \cdot Tp$ is supposed to be equal to the required energy $2.E(all:P)$. Therefore the relationship represented by Eq. (7) below is obtained.

$$W \cdot (2 \cdot T_P) = 2 \cdot E(all:P) \tag{7}$$

Since the enclosed area between the acceleration-deceleration curve and the time axis in Fig. 4 corresponds to the angular displacements $\Delta \theta 1$ and $\Delta \theta 2$,

$$\omega 1(P) = \frac{\Delta \theta 1}{T_P}$$

$$\omega 2(P) = \frac{\Delta \theta 2}{T_P} \tag{8}$$

Eq. (9) is obtained by substituting Eq. (8) for Eq. (6) to solve the peak time Tp. Meanwhile, Eq. (10) is obtained by substituting Eq. (8) for Eq. (6) to solve the peak time Tp.

$$T_P = \sqrt{\frac{[A1 + A2 \cdot \cos \theta 2(P)] \cdot (\Delta \theta 1)^2 + B1 \cdot (\Delta \theta 2)^2 + [C1 + C2 \cdot \cos \theta 2(P)] \cdot (\Delta \theta 1) \cdot (\Delta \theta 2)}{2 \cdot E(all:P)}} \tag{9}$$

$$T_P = \sqrt[3]{\frac{[A1 + A2 \cdot \cos \theta 2(P)] \cdot (\Delta \theta 1)^2 + B1 \cdot (\Delta \theta 2)^2 + [C1 + C2 \cdot \cos \theta 2(P)] \cdot (\Delta \theta 1) \cdot (\Delta \theta 2)}{2 \cdot W}} \tag{10}$$

Eq. (9) represents Tp by the parameters ($\Delta \theta 1$, $\Delta \theta 2$, $\theta 2(P)$) and the energy $E(all:P)$ when the arms b1 and b2 are displaced in accordance with the acceleration-deceleration curve of Fig. 4, in which $\Delta \theta 1$ and $\Delta \theta 2$ are the respective displacements of the arms b1 and b2, and $\Delta \theta 2(P)$ is the position where the velocity of the second arm b2 reaches its peak ($t = Tp$). This equation is useful for determining the dynamic constants A1, A2, B1 and so forth.

When the robot is so driven as to perform a reciprocative motion without a pause, the entire energy per reciprocation is $2 \cdot E(all:P)$, so that the peak time Tp is given by Eq. (9).

In an exemplary case where $\Delta \theta 2 = 0$, $\theta 2(P) = \pi/2$ for calculating the constant A1, Eq. (11) is obtained by substituting the above values for Eq. (9).

$$T_P = \sqrt{\frac{A1 \cdot (\Delta \theta 1)^2}{2 \cdot E(all:P)}} \tag{11}$$

Eq. (11) represents an aspect where the first arm b1 alone is actuated in accordance with the triangular acceleration-deceleration curve.

Fig. 6 is an equivalent circuit diagram relative to the motor for the first arm b1. With respect to this circuit, Eq. (12) represents the relationship among voltage V, current I, internal resistance R, counterelectromotive force constant KE (1), and angular velocity ω1.

$$V \cdot I = I^2 \cdot R + KE(1) \cdot I \cdot \omega 1 \tag{12}$$

Multiplying the two sides of Eq. (12) by dt forms Eq. (13). The left side of this equation represents the supply energy, while the first term of the right side represents the resistance loss, and the second term thereof represents the dynamic energy of the motor.

$$V \cdot I \cdot dt = I^2 \cdot R \cdot dt + KE(1) \cdot I \cdot \omega 1 \cdot dt \tag{13}$$

The energy $2 \cdot E(all{:}P)$ is given by the time integral (interval $0 \le t \le 2 \cdot Tp$) of the second term of the right side of Eq. (13). It is expressed as

$$2 \cdot E(all{:}P) = 2 \cdot KE(1) \cdot I \cdot \int_0^{T_p} \omega 1 \, dt \qquad \dots \dots (14)$$

It is to be noted that, in the right side of Eq. (14), the current I is fixed and is out of the integral since the acceleration in the acceleration-deceleration curve is fixed, and the integral becomes double the value in the interval ($0 \le t \le Tp$) due to the symmetry of the acceleration-deceleration curve.

In the acceleration-deceleration curve of Fig. 4, the acceleration pattern can be expressed by a linear expression of Eq. (15) having a fixed inclination as

$$\omega 1 = \frac{\omega 1(P)}{T_P} \cdot t \tag{15}$$

Therefore an integration is executed with substitution of Eq. (15) for Eq. (14) and, after $\omega 1(P) \cdot Tp$ is replaced with $\Delta\theta 1$ according to the first expression of Eq. (8), the result thereof is substituted for Eq. (11). Then Eq. (16) is finally obtained.

$$T_P = \sqrt{\frac{A1 \cdot \Delta\theta 1}{KE(1) \cdot I}} \tag{16}$$

In finding the constant A1 by actual measurement from Eq. (16), the first arm b1 alone is actuated without any pause under the conditions of $\Delta\theta 2 = 0$ and $\theta 2(P) = \pi/2$ with a displacement $\Delta\theta 1$ and a peak time Tp, and then the effective current I flowing in the motor is measured and substituted for Eq. (16), whereby the constant A1 can be calculated. (In this case, KE(1) is supposed to have a known value.)

The constants A2 and B1 can also be calculated by actual measurement in the same manner as the above. As for calculation of the constant A2, Eq. (17) is obtained under the conditions of $\Delta\theta 2 = 0$ and $\theta 2(P) = 0$. Meanwhile with regard to the constant B1, Eq. (18) is obtained under the condition of $\Delta\theta 1 = 0$.

$$T_P = \sqrt{\frac{(A1 + A2) \cdot \Delta\theta 1}{KE(1) \cdot I}} \tag{17}$$

$$T_P = \sqrt{\frac{B1 \cdot \Delta\theta 2}{KE(2) \cdot I}} \tag{18}$$

The constants A1 and A2 can be calculated by solving Eq. (17) and Eq. (16) simultaneously. As for Eq. (18), the desired result is obtained by measuring the effective current while repeating the motion of the second arm b2 alone. (In this case, the counterelectromotive force constant KE(2) relative to the second-arm driving motor is supposed to have a known value.)

After the constants A1, A2 and B1 have thus been obtained, the remaining constants C1 and C2 can be calculated with ease from the relationship of $C1 = 2 \cdot B1$ and $C2 = A2$ in Eq. (5).

Such constants originally have attributions obtainable by calculation if the dynamic parameters and the like are exactly known as given in Eq. (5). Practically, however, there exist some difficulties in accurately calculating the centroid position and so forth. In view of such practical difficulties, the above method of calculating the constants on the basis of the actual motion of the robot is considered to be simpler and superior in the point that it reflects the robot motion faithfully.

Since sequential preparations have thus been completed through the dynamical analysis relative to the robot system, a description will be given below on the significance of Eq. (10) mentioned above.

Eq. (10) represents the relationship between the peak time Tp and the power W of the driving motors for the arms b1 and b2, as will be understood from the process of deriving the equation.

As is obvious from the expression where the power W is placed in the denominator of the cubic root, the tact time (= 2·Tp) can be reduced by increasing the power W.

However, it is impossible to increase the power W to an infinite extent since the power W is the sum of the respective powers of the driving motors for the arms b1 and b2.

More specifically, the condition represented by Eq. (19) is imposed on the power W with regard to the output W1 and the maximum output W1m of the driving motor for the first arm b1 and also to the output W2 and the maximum output W2m of the driving motor for the second arm b2.

$$W = W1 + W2 \leqq W1m + W2m$$

$$W1 \leqq W1m$$

$$W2 \leqq W2m \tag{19}$$

The condition includes a restriction of the total power signifying that W should not exceed the sum of W1m + W2m, and simultaneously a restriction of the individual powers signifying that the outputs W1 and W2 of the two motors should not exceed the respective maximum outputs W1m and W2m.

In an attempt to render the relationship between Eqs. (19) and (10) more manifest, Eq. (10) is modified to Eq. (20).

$$W = A \cdot \frac{(\Delta\theta1)^2}{2 \cdot T_P^3} + B \cdot \frac{(\Delta\theta2)^2}{2 \cdot T_P^3} + C \cdot \frac{(\Delta\theta1) \cdot (\Delta\theta2)}{2 \cdot T_P^3}$$

$$A = A1 + A2 \cdot \cos\theta2(P)$$

$$B = B1$$

$$C = C1 + C2 \cdot \cos\theta2(P) \tag{20}$$

In Eq. (20), new constants A, B, C are defined by replacing the former constants in order to simplify the form of the expression.

The following problem is posed as to which means is needed to shorten the tact time under the conditions of Eq. (19). Hereinafter such problem will be discussed.

"Find the value of the power W (i.e. maximum W) to minimize the peak time Tp under the conditions of Eq. (19), in operating the robot in accordance with the acceleration-deceleration curve (Fig. 4) of the peak time Tp to cause displacements $\Delta\theta1$ and $\Delta\theta2$ of the arms b1 and b2. However, the boundary condition of Eq. (21) must be satisfied.

$$W = W1m \qquad \text{when } \Delta\theta2 = 0$$

$$W = W2m \qquad \text{when } \Delta\theta1 = 0 \tag{21}$$

The above boundary condition signifies that, when one of the arms is not moved, the tact time is minimized by rotating the other arm with the maximum output of the motor.

Since the power W is calculated as a solution of the above problem, it becomes possible to operate the robot in the minimum peak time by fully utilizing the power of the driving motor to a maximum extent.

The idea contrived in view of such problem is that the tact time may be minimized by operating the robot with the maximum output of both arm driving motors.

According to such means, however, a desired synchronism may not exactly be attained between the acceleration-deceleration curves of both arms, and further it is not obvious whether the outputs of the motors are properly assigned to the individual terms of the right side of Eq. (20).

Clarifying the above problem further simply, the following aspect may be achieved.

First, when the fore end of the robot arm is to be displaced from one position to another, the energy required for the displacement is 2·E(all:P) as mentioned.

This energy is supplied from the two arm driving motors for the time of $0 \leq t \leq 2 \cdot Tp$ during which the robot is in motion as given by Eq. (7), so that the above energy is equal to the value obtained by multiplying the energy W per unit time by the required time 2·Tp.

If "the energy can be completely transferred between the two arms" in such a manner that the energy of the driving motor for one arm is usable for moving the other arm, then the tact time can be minimized by rotating each driving motor with its maximum output.

However, due to the actual existence of a certain restriction on the energy distribution, the circumstances are practically different.

It becomes apparent from the following physical consideration that, regarding the first and third terms of the right side of Eq. (20), the energy is supplied from the driving motor for the first arm b1, whereas regarding the second term of the right side of Eq. (20), the energy is supplied from the driving motor for the second arm b2.

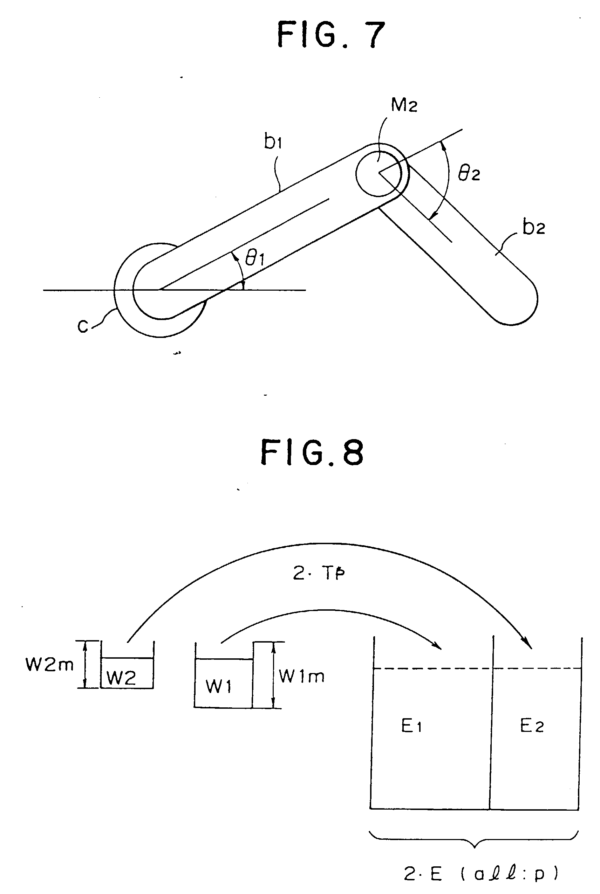

Fig. 7 is a plan view schematically illustrating a biaxial scalar type robot, wherein a driving motor M2 for a second arm b2 is screwed firmly to a first arm b1.

The first arm b1 is connected rotatably to an axial base portion c. Suppose now that the servo control for the first arm b1 is released. Then, in view of the coordinate system fixed in the axial base portion c, the generated torque of the motor M2 inclusive of the first arm b1 is an internal couple of force, which is incapable of changing the angle θ1 of the first arm b1.

In case the second arm b2 is displaced (rotated) by such torque, it follows that the inertial center of the second arm b2 is also displaced. However, since the inertial center of the entire system including both the first and second arms remains unchanged (as the torque of the motor M2 is an internal one), the inertial center of the first arm b1 is displaced to meet such requirement, whereby the angle θ1 is changed.

Consequently, in this case, the power W2 of the motor M2 is distributed as the energies for the arms b1 and b2.

In a state where the first arm b1 is firmly connected to the axial base portion (i.e., when position servo control is being executed), the second arm b2 alone is moved and the output power W2 is consumed merely for such displacement.

During the operation of the robot, servo control is executed on the driving motor for the first arm b1 and, if such servo control is functionally sufficient, the effect thereof is substantially the same as that in holding the first arm b1 fixedly. The condition that "each arm is movable exactly in accordance with any command value" mentioned in (2) as one analytic premise for the robot system is said to ensure such circumstances.

Summing up the above, as given by Eq. (22), W1 is consumed as the power for the square term of Δθ1 and the associated term of Δθ1 and Δθ2 in Eq. (20), while W2 is consumed as the power for the square term of Δθ2 in Eq. (20).

$$W = W1 + W2$$

$$W1 = A \cdot \frac{(\Delta\theta1)^2}{2 \cdot T_P{}^3} + C \cdot \frac{(\Delta\theta1) \cdot (\Delta\theta2)}{2 \cdot T_P{}^3}$$

$$W2 = B \cdot \frac{(\Delta\theta2)^2}{2 \cdot T_P{}^3} \tag{22}$$

As the whereabouts of the problem is thus rendered obvious, a means for shortening the tact time, i.e. for minimizing the peak time Tp, comes to be achievable as follows.

Fig. 8 is a conceptual diagram showing the relationship of the energy distribution in the problem. The total energy $2 \cdot E(all:P)$ required for operating the robot is composed of E2 for displacement of the second arm b2 and the other E1. The energy E1 is supplied to induce a power W1 (maximum value W1m) per unit time, while the energy E2 is supplied to induce a power W2 (maximum value W2m) per unit time.

In this case, the powers W1, W2 are supplied during the predetermined time $2 \cdot Tp$ so that the required energies E1, E2 are exactly obtained, and the core of the problem resides in the point that how the peak time Tp can be minimized by supplying the power the least number of times.

The answer to such problem depends upon the relationship between the length of the time required until obtaining the energy E1 with supply of the maximum W1m of the power W1, and the length of the time required until obtaining the energy E2 with supply of the maximum W2m of the power W2.

In a comparison of the required time E1/W1 with the time E2/W2, if the former is longer, it is impossible to reduce the required time any further than that. Meanwhile, if the latter is longer to the contrary, the required time is not reducible any more.

This fact is mathematically represented by Eqs. (23) through (27).

First, the time Tp calculated under the condition of W1 = W1m in Eq. (22) is defined as Tp(1), and the time Tp calculated under the condition of W2 = W2m is defined as Tp(2). That is, Tp(1) and Tp(2) are obtained as solutions to satisfy Eq. (23) below.

$$W1m = A \cdot \frac{(\Delta\theta1)^2}{2 \cdot [T_P(1)]^3} + C \cdot \frac{(\Delta\theta1) \cdot (\Delta\theta2)}{2 \cdot [T_P(1)]^3}$$

$$W2m = B \cdot \frac{(\Delta\theta2)^2}{2 \cdot [T_P(2)]^3} \tag{23}$$

The double values of such Tp(1) and Tp(2) correspond to the periods of time required for energy supply in the individual cases. And, as given by Eq. (24), the greatest value of Tp(1), Tp(2) and $Tp^{MIN}$ is selected as final Tp, where $Tp^{MIN}$ denotes the minimum peak time derived from the restriction of the frequency (f) characteristics in the servo control

$$Tp = MAX \{Tp(1), Tp(2), Tp^{MIN}\} \tag{24}$$

The values of W1 and W2 are determined by the use of Tp thus obtained.

This aspect will now be described below with regard to the individual cases -depending on the relative lengths of Tp(1) and Tp(2).

[i] When Tp = Tp(1) > Tp(2)

In this case, W1 is equal to the maximum W1m, while W2 has the value obtained by substituting Tp = Tp(1) for the third expression of Eq. (22). The above can be represented by Eq. (25) as follows.

$$T_P = T_P(1)$$

$$W1 = W1m = A \cdot \frac{(\Delta\theta1)^2}{2 \cdot T_P^{\ 3}} + C \cdot \frac{(\Delta\theta1) \cdot (\Delta\theta2)}{2 \cdot T_P^{\ 3}}$$

$$W2 = B \cdot \frac{(\Delta\theta2)^2}{2 \cdot T_P^{\ 3}}$$

$$W = W1 + W2 = W1m + B \cdot \frac{(\Delta\theta2)^2}{2 \cdot T_P^{\ 3}} \tag{25}$$

[ii] When Tp = Tp(2) > Tp(1)

Exactly contrary to the case [i], W2 is equal to the maximum W2m while W1 has the value obtained by substituting Tp = Tp(2) for the second expression of Eq. (22), as represented by Eq. (26) below.

$$T_P = T_P(2)$$

$$W1 = A \cdot \frac{(\Delta\theta1)^2}{2 \cdot T_P^{\ 3}} + C \cdot \frac{(\Delta\theta1) \cdot (\Delta\theta2)}{2 \cdot T_P^{\ 3}}$$

$$W2 = W2m = B \cdot \frac{(\Delta\theta2)^2}{2 \cdot T_P^{\ 3}}$$

$$W = W1 + W2 = A \cdot \frac{(\Delta\theta1)^2}{2 \cdot T_P^{\ 3}} + C \cdot \frac{(\Delta\theta1) \cdot (\Delta\theta2)}{2 \cdot T_P^{\ 3}} + W2m \tag{26}$$

[iii] When Tp = Tp(1) = Tp(2)

In this case, both W1 and W2 are equal to the maxima thereof respectively, as represented by Eq. (27) below.

$$T_P = T_P(1) = T_P(2)$$

$$W1 = W1m$$

$$W2 = W2m$$

$$W = W1m + W2m \tag{27}$$

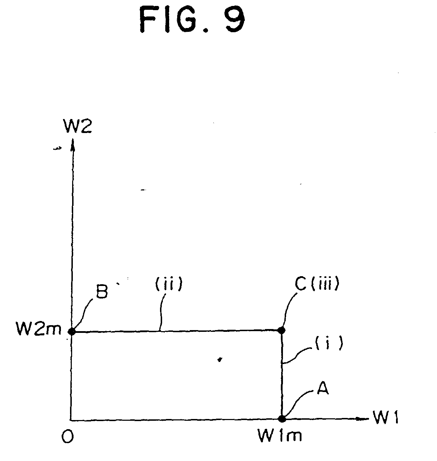

Fig. 9 graphically shows the powers of the driving motors for facilitating the visual apprehension of the aspects [i] through [iii], where W1 is taken along the abscissa and W2 along the ordinate.

As obvious from Eq. (19) mentioned above, the region allowable as a variability domain of W1 and W2 is a rectangular area (including the boundary) in Fig. 9 defined by the origin O (0, 0), point A (W1m, 0), point B (0, W2m) and point C (W1m, W2m). The point A corresponds to the former of the two boundary conditions given by Eq. (21), i.e. W = W1 = W1m, W2 = 0 (Δθ2 = 0); and the point B corresponds to the latter thereof, i.e. W = W2 = W2m, W1 = 0 (Δθ1 = 0). For example, the point A includes the aspect shown in Fig. 12, wherein the difference between the states of the arms in (a) and (b) is expressed by the cos term of the coefficient A in Eq. (20) .

The aspects [i] through [iii] mentioned above are positioned on the boundary where W1 = W1m and W2 = W2m. A and in such states on the line, the power for the driving motors can be drawn out most efficiently to minimize the tact time.

The point A on the line of W1 = W1m represents [i]; the point B on the line of W2 = W2m represents [ii]; and the point C at the intersection thereof represents [iii].

The solution for minimizing the tact time has thus been obtained. Hereinafter a description will be given on a method and an apparatus for generating acceleration and deceleration patterns based on the theory mentioned.

Prior to explaining the constitution of the apparatus, a control mode will first be described below inclusive of an attempt to summarize the consideration given above.

The acceleration-deceleration pattern generating method of the present invention is broadly divided into the following three procedures as shown in Fig. 2.

(a) Setting of parameters and constants

The dynamic constants (A1, A2, B1, etc.) and the maximum output values (W1m, W2m) of the driving motors are set in advance. Thereafter, such values are kept unchanged. And the dynamic parameters (Δθ1,Δθ2, etc.) conforming with commands for operating the robot are set to proper values in response to each command.

(b) Calculation of peak time Tp

The discussion developed hereinabove is concerned mostly with its logical explication. The essential points thereof are summarized as follows.

(b-1) Calculation of energy expression

The energy of the entire system represented by Eq. (4) is calculated from the dynamic analysis of the robot.

(b-2) Prescription of power distribution

The contribution of the power of each arm driving motor to each term of the energy expression is dynamically analyzed.

(b-3) Calculation of Tp value per arm

After prescription of the power distribution, there are calculated, as shown in Eq, (23), temporary Tp values (Tp (1), Tp(2)) when the power term per arm is equal to the maximum output of the relevant motor.

(b-4) Determination of Tp value

The maximum out of some Tp values mentioned above is selected as a practical Tp value.

(c) Generation of acceleration and deceleration patterns

As for specific generation of the pattern, it is possible to adopt the method proposed by the present applicant in Japanese Patent Application No. Hei 2 (1990)-283867. Merely the principal point thereof will now be described below.

(c-1) Generation of acceleration pattern

First, there is prepared an acceleration pattern represented by the use of a function standardized with regard to a displacement. The peak time in the pattern is set to a predetermined value.

In generating the acceleration pattern, a desired function is obtained through multiplication of a standard function by the displacement (strictly, by a proportional coefficient for correction of the displacement), and a temporal scale conversion is executed for the standard function by using, as a conversion parameter, the ratio of the Tp value, which is the result of the calculation in (b), to the standard Tp value. Namely, in comparison with the known method disclosed in the cited Japanese Patent Application No Hei 2 (1990)-283867 where the Tp value is prescribed on the basis of the displacement, the present invention is grounded on the idea that the optimal Tp value is prescribed on the basis of the dynamic analysis of the robot system.

(c-2) Generation of deceleration pattern

A predetermined procedure is carried out to form a curve temporally symmetrical with the acceleration pattern. That is, a deceleration pattern is generated by causing changes of the velocity exactly reverse to those of the acceleration pattern.

It is a matter of course that such acceleration and deceleration patterns are generated for each of the arms. (See Fig. 4)

It is to be particularly noted here that, in the present invention, there exists no restriction on any concrete form of the acceleration-deceleration curve,

More specifically, the form of the acceleration-deceleration curve is not limited merely to the aforementioned triangular one taken as an example in the above discussion for making the present invention easily understood. Since the expression corresponding to Eq. (23) becomes complicate in general, it becomes possible to solve the peak time Tp algebraically as given by Eq. (9) or (10). However, Tp(1) and Tp(2) can be calculated by numerically solving the general expressions F(Tp) = W1m and G(Tp) = W2m relative to Eq. (23). And such mathematic problem is not concerned at all with the essential point of the present invention.

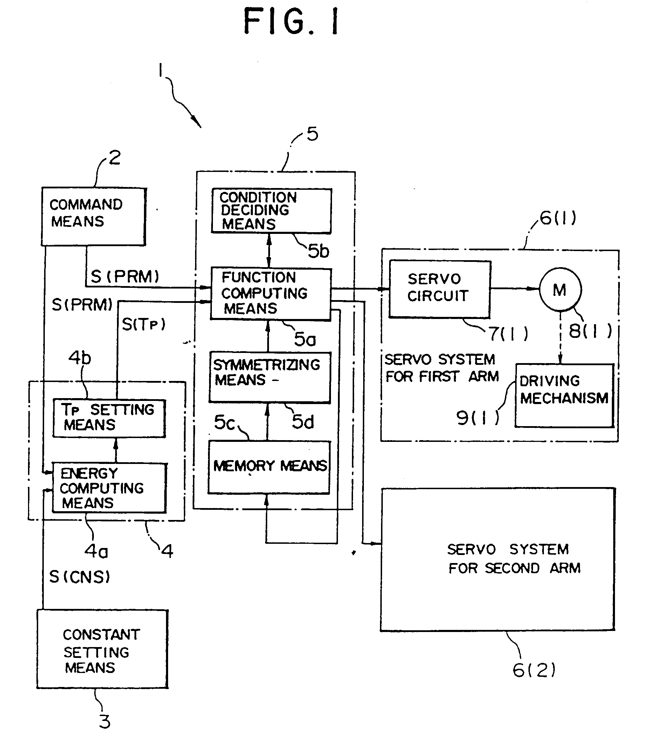

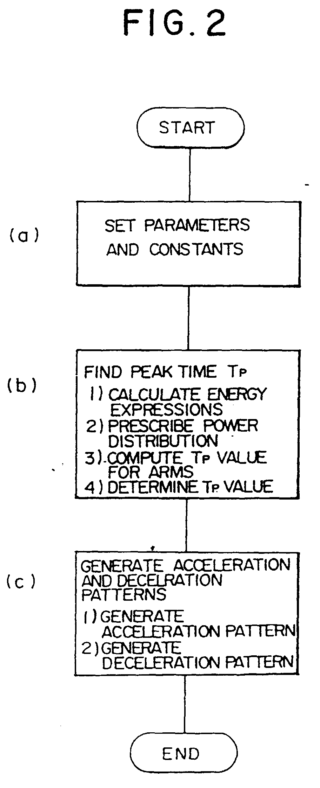

Fig. 1 is a block diagram showing the constitution of an exemplary apparatus to carry out the pattern generating method mentioned above.

As shown in the diagram, the acceleration-deceleration pattern generating apparatus 1 comprises a command means 2, a constant setting means 3, a peak time calculating means 4 and a pattern generating means 5, wherein a control signal relative to a generated acceleration-deceleration pattern is outputted to a servo system 6(1) for a first arm b1 and also to a servo system 6(2) for a second arm b2.

Practically the individual component means constituting the acceleration-deceleration pattern generating apparatus 1 are realized by the process of software, and the functions thereof are visually shown in the diagram.

The command means 2 is responsive to each robot operating command and delivers a command signal S(PRM) of a predetermined dynamic parameter such as $\Delta\theta1$ or $\Delta\theta2$ to the peak time calculating means 4 and the pattern generating means 5.

The constant setting means 3 serves to set predetermined dynamic constants (A1, A2, B1, etc.) and maximum outputs (W1m, W2m) of driving motors. After completion of such setting, the set values are retained without any alteration unless the robot to be controlled is changed.

The peak time calculating means 4 consists of an energy computing means 4a and a Tp setting means 4b.

The energy computing means 4a receives a constant setting signal S(CNS) from the constant setting means 3 or a command signal S(PRM) from the command means 2, then executes the calculation of Eq. (23) in conformity with the information thus received, and delivers the resultant value of Tp(1) or Tp(2) to the Tp setting means 4b.

The Tp setting means 4b selects the greatest value as Tp according to Eq. (24) and sends a command signal S (Tp) to the pattern generating means 5.

The pattern generating means 5 consists of a function computing means 5a, a condition deciding means 5b, a memory means 5c and a symmetrizing means 5d.

The function computing means 5a serves to compute the function for generating a desired acceleration or deceleration pattern which conforms with the signal S(PRM) from the command means 2 or the signal S(Tp) from the peak time calculating means.

Namely, the operation regarding the standard function is performed as described in (c) relative to the pattern generating method.

The memory means 5c and the symmetrizing means 5d are concerned with generation of a deceleration pattern.

More specifically, the velocity values relative to the acceleration pattern obtained by the function computing means 5a are sequentially stored in the memory means 5c in the order of the lapse of time, and in the subsequent deceleration period, the velocity values stored in the memory 5c are sequentially read out therefrom by the symmetrizing means 5d in the order reverse to the storage, whereby a deceleration pattern is generated. This procedure forms a desired deceleration pattern where the changes of the velocity in the acceleration pattern are reflected with respect to the time.

The condition deciding means 5b makes a decision over a control mode in response to the command signal S (PRM), in such a manner as to select, for example, one control mode for proceeding to deceleration from acceleration via fixed-velocity control when the result of computing the angular velocity is prone to exceed the allowable maximum value in the motor. And after such decision relative to the pattern generation, an instruction is outputted to the function computing means 5a.

The acceleration-deceleration pattern generation is performed in parallel with the arm driving axes, and the control values obtained as a result of the pattern generation are outputted to the servo systems 6(1) and 6(2) respectively.

Out of the control values delivered from the function computing means 5a, the value relevant to control of the first arm b1 is supplied to a servo circuit 7(1) of the servo system 6(1), whereby the rotation control of a motor 8(1) is executed in conformity with one acceleration-deceleration curve of Fig. 4 (having a higher peak), so that the first arm b1 is actuated via a driving mechanism 9(1).

Since the servo system 6(2) for the second arm b2 is structurally the same as the servo system 6(1), the internal constitution thereof is omitted in the diagram. Its operation is performed in a manner that the rotation of the motor is controlled in conformity with the other acceleration-deceleration curve of Fig. 4(having a lower peak) by the control value outputted from the function computing means 5a, and finally the motion of the second arm b2 is prescribed.

According to the present invention, as apparent from the description given hereinabove, either of a plurality of driving axes having relationship of mutual dynamic interference is moved with the allowable maximum power of the driving source on the basis of analyzing the energy and power distribution relative to the servo system, so that the capability of the driving source can be fully utilized to the utmost extent to consequently minimize the time required for a desired displacement.

Furthermore, due to the clarity of its algorithm, the control action is never dominated by any experimental data or the experience of a designer.

In the present invention also, minimum necessary experiments are executed in view of the point that the dynamic constants (A1, A2, B1, etc.) are calculated from the data based on the measurement according to Eqs. (16) through (18) without the use of Eq. (5). However, such experiments are based merely on the logical analysis, and the characteristic thereof resides in an attempt to perform proper control for the actual action of each arm.

Therefore the characteristic is different from any experiment conducted for searching the mode of control.

It is a matter of course that the present invention is applicable in general to any servo system equipped with a multiplicity of driving axes. In such a case, the operation is performed in a procedure of first prescribing the power distribution for each driving axis, then calculating the temporary peak peak time with regard to each axis on the basis of the maximum power value per axis, and selecting the greatest value of all as the peak time for the entire system.

**Claims**

1.  An apparatus for generating acceleration and deceleration patterns for a servo system so constituted as to exert dynamic interference from the motion of one driving axis to that of another driving axis, in such a manner that a synchronism is attained at acceleration start points, velocity peak points and deceleration end points in the acceleration and deceleration patterns for the individual driving axes, said apparatus comprising:

    constant setting means (3) for setting dynamic constants specific to said servo system;

    command means (2) responsive to displacement instructions and outputting commands for the start and end positions of each displacement with respect to dynamic parameters;

    peak time calculating means (4) responsive to the information relative to the dynamic parameters from said constant setting means (3) or the information relative to the dynamic parameters from said command means (2), and calculating and setting the peak time required until the velocity reaches its peak in the acceleration-deceleration pattern, and

    acceleration-deceleration pattern generating means (5) responsive to the command relative to the peak time from said peak time calculating means (4), and generating an acceleration pattern in such a manner that the time required for the velocity to reach its peak point from the acceleration start point becomes equal to the peak time obtained by said peak time calculating means (4), said pattern generating means (5) further serving to perform temporal symmetrisation with respect to said acceleration pattern to thereby generate a temporally reflected deceleration pattern;

    characterised in that:

    the constant setting means (3) sets the dynamic constants by dynamically analysing the motion of the servo system;

    said peak time calculating means (4) consists of energy computing means (4a) and peak time setting means (4b), wherein said energy computing means (4a) expresses the dynamic parameters as functions of the peak time and computes the kinetic energy, which is required for the displacement, as a function of the peak time on the basis of the dynamic constants and the dynamic parameters, said energy computing means (4a) further ascribing each of the energy terms in the function to one of the driving sources (8) of the system, and calculating respective peak time values by setting the sum of the energy terms ascribed to each respective driving source (8) equal to the maximum power of that driving source (8); said peak time setting means (4b) serving to set, as the peak time of the servo system, the maximum of the respective peak time values so calculated.

2. A method of generating acceleration and deceleration pattern for a servo system so constituted as to exert dynamic interference from the motion of one driving axis to that of another driving axis, in such a manner that a synchronism is attained at acceleration start points, velocity peak points and deceleration end points in the acceleration and deceleration patterns for the individual driving axes, said method comprising the steps of:

setting dynamic parameters specific to the servo system, then designating the start and end positions of each displacement with respect to the dynamic parameters, and expressing the dynamic parameters as functions of the peak time required for the velocity to reach its peak in the acceleration-deceleration patterns; calculating the peak time; and

generating an acceleration pattern relative to each driving axis in such a manner that the time required for the velocity to reach its peak point from the acceleration start point becomes equal to the calculated peak time, then performing temporal symmetrisation with respect to said acceleration pattern to thereby generate a temporally reflected deceleration pattern;

characterised by

setting the dynamic parameters by dynamically analysing the motion of the servo system;

calculating the kinetic energy, which is required for the displacement, as a function of the peak time on the basis of the dynamic constants and the dynamic parameters, and ascribing each of the energy terms in that function to one of the driving sources (8) for the axes;

calculating respective peak time values by setting the sum of the energy terms ascribed to each respective driving source (8) equal to the maximum power value allowable by the driving source (8); and

selecting, as the peak time of said servo system, the maximum of the peak time values so calculated.

## Patentansprüche

1. Gerät zur Erzeugung von Beschleunigungs- und Verzögerungsmustern für ein Servosystem, das so aufgebaut ist, daß es eine dynamische Beeinflussung von der Bewegung der einen Antriebsachse zu der einer anderen Antriebsachse in einer Weise ausübt, daß ein Synchronismus an Beschleunigungs-Startpunkten, Geschwindigkeits-Spitzenpunkten und Verzögerungsendpunkten in den Beschleunigungs- und Verzögerungsmustern für die individuellen Antriebsachsen erreicht wird, wobei das Gerät aufweist:

eine Konstanten-Setzeinrichtung (3) zum Setzen von dynamischen Konstanten, die für das Servosystem spezifisch sind;
eine Befehlseinrichtung (2), die auf Verstellinstruktionen und Ausgabebefehle reagiert, für die Start- und Endpositionen einer jeden Verstellung in bezug auf dynamische Parameter;
eine Spitzenzeit-Berechnungseinrichtung (4), die auf die Information bezüglich der dynamischen Parameter von der Konstanten-Setzeinrichtung (3) oder der Information bezüglich der dynamischen Parameter von der Befehlseinrichtung (2) reagiert, und die die Spitzenzeit berechnet und setzt, die erforderlich ist, bis die Geschwindigkeit ihre Spitze im Beschleunigungs-Verzögerungsmuster erreicht, und
eine Beschleunigungs-Verzögerungs-Muster- Erzeugungseinrichtung (5), die auf den Befehl in bezug auf die Spitzenzeit von der Spitzenzeit-Berechnungseinrichtung (4) reagiert und die ein Beschleunigungsmuster in einer Weise erzeugt, daß die Zeit, die für die Geschwindigkeit erforderlich ist, ihren Spitzenpunkt vom Beschleunigungs-Startpunkt aus zu erreichen, gleich der Spitzenzeit wird, die durch die Spitzenzeit-Berechnungseinrichtung (4) erhalten wird, wobei die Muster-Erzeugungseinrichtung (5) weiter dazu dient, eine zeitliche Symmetrierung in bezug auf das Beschleunigungsmuster durchzuführen, um dadurch ein zeitlich gespiegeltes Verzögerungsmuster zu erzeugen;

dadurch gekennzeichnet daß:

die Konstanten-Setzeinrichtung (3) die dynamischen Konstanten durch dynamische Analyse der Bewegung des Servosystems setzt;

die Spitzenzeit-Berechnungseinrichtung (4) aus einer Energie-Berechnungseinrichtung (4a) und einer Spitzenzeit-Setzeinrichtung (4b) besteht, wobei die Energie-Berechnungseinrichtung (4a) die dynamischen Parameter als Funktionen der Spitzenzeit ausdrückt und die kinetische Energie, die für die Verstellung erforderlich ist, als eine Funktion der Spitzenzeit auf der Basis der dynamischen Konstanten und der dynamischen Parameter berechnet, wobei die Energie-Berechnungseinrichtung (4a) außerdem jeden der Energie-Ausdrücke in der Funktion einer der Antriebsquellen (8) des Systems beimißt, und Berechnen der entsprechenden Spitzenzeitwerte durch Setzen der Summe der Energie-Ausdrücke, die jeder entsprechenden Antriebsquelle (8) beigemessen werden, gleich der maximalen Leistung dieser Antriebsquelle (8); wobei die Spitzenzeit-Setzeinrichtung (4b) dazu dient, als Spitzenzeit des Servosystems das Maximum der so berechneten entsprechenden Spitzenzeitwerte zu setzen.

2. Verfahren zur Erzeugung von Beschleunigungs- und Verzögerungsmustern für ein Servosystem, das so aufgebaut ist, daß es eine dynamische Beeinflussung von der Bewegung der einen Antriebsachse zu der einer anderen Antriebsachse in einer Weise ausübt, daß ein Synchronismus an den Beschleunigungs-Startpunkten, den Geschwindigkeits-Spitzenpunkten und den Verzögerungs-Endpunkten in den Beschleunigungs- und Verzögerungsmustern für die individuellen Antriebsachsen erzielt wird, wobei das Verfahren die Schritte aufweist:

Setzen der dynamischen Parameter, die für das Servo-System spezifisch sind, anschließendes Bestimmen der Start- und Endpositionen einer jeden Verstellung in bezug auf die dynamischen Parameter, und Ausdrücken der dynamischen Parameter als Funktionen der Spitzenzeit, die für die Geschwindigkeit erforderlich ist, ihre Spitze in den Beschleunigungs-Verzögerungs-Mustern zu erreichen; Berechnen der Spitzenzeit; und

Erzeugen eines Beschleunigungsmusters in bezug auf jede Antriebsachse in einer Weise, daß die Zeit, die für die Geschwindigkeit erforderlich ist, um ihren Spitzenpunkt vom Beschleunigungs-Startpunkt aus zu erreichen, gleich der berechneten Spitzenzeit wird, dann Durchführen einer zeitlichen Symmetrierung in bezug auf das Beschleunigungsmuster, um dadurch ein zeitlich gespiegeltes Verzögerungsmuster zu erzeugen; gekennzeichnet durch

Setzen der dynamischen Parameter durch dynamische Analyse der Bewegung des Servosystems;

Berechnen der kinetischen Energie, die für die Verstellung erforderlich ist, als eine Funktion der Spitzenzeit auf der Basis der dynamischen Konstanten und der dynamischen Parameter, und Beimessen eines jeden der Energie-Ausdrücke in dieser Funktion einer der Antriebsquellen (8) für die Achsen;

Berechnen entsprechender Spitzenzeitwerte durch Setzen der Summe der Energie-Ausdrücke, die jeder entsprechenden Antriebsquelle (8) beigemessen werden, gleich dem maximalen Leistungswert, der durch die Antriebsquelle (8) erlaubbar ist; und

Auswählen - als Spitzenzeit des Servosystems - des Maximalwerts der so berechneten Spitzenzeitwerte.

## Revendications

1. Appareil pour générer des motifs d'accélération et de décélération pour un système asservi conçu de manière à exercer une interférence dynamique du mouvement d'un axe d'entraînement par rapport à celui d'un autre axe d'entraînement, de telle manière qu'une synchronisation soit atteinte au niveau de points de début d'accélération, de points de pic de vitesse et de points de fin de décélération dans les motifs d'accélération et de décélération pour les axes d'entraînement individuels, ledit appareil comprenant :

un moyen d'établissement de constante (3) pour établir des constantes dynamiques spécifiques audit système asservi ;

un moyen de commande (2) sensible à des instructions de déplacement et émettant en sortie des commandes pour les positions de début et de fin de chaque déplacement en relation avec des paramètres dynamiques ;

un moyen de calcul de temps de pic (4) sensible à l'information relative aux paramètres dynamiques provenant dudit moyen d'établissement de constante (3) ou à l'information relative aux paramètres dynamiques provenant dudit moyen de commande (2), et calculant et établissant le temps de pic nécessaire jusqu'à ce que la vitesse atteigne son pic dans le motif d'accélération-décélération ; et

un moyen de génération de motif d'accélération-décélération (5) sensible à la commande relative au temps de pic provenant dudit moyen de calcul de temps de pic (4) et générant un motif d'accélération de manière à ce que le temps nécessaire pour que la vitesse atteigne son point de pic depuis le point de début d'accélération devienne égal au temps de pic obtenu par ledit moyen de calcul de temps de pic (4), ledit moyen de génération de motif (5) servant en outre à réaliser une symétrisation temporelle par rapport audit motif d'accélération pour générer ainsi un motif de décélération à réflexion temporelle,
caractérisé en ce que:
le moyen d'établissement de constante (3) établit les constantes dynamiques en analysant dynamiquement le mouvement du système asservi ;
ledit moyen de calcul de temps de pic (4) est constitué par un moyen de calcul d'énergie (4a) et par un moyen d'établissement de temps de pic (4b), dans lequel ledit moyen de calcul d'énergie (4a) exprime les paramètres dynamiques en tant que fonctions du temps de pic et calcule l'énergie cinétique qui est nécessaire pour le déplacement en tant que fonction du temps de pic sur la base des constantes dynamiques et des paramètres dynamiques, ledit moyen de calcul d'énergie (4a) attribuant en outre chacun des termes d'énergie dans la fonction à l'une des sources d'entraînement (8) du système et calculant des valeurs de temps de pic respectives en établissant la somme des termes d'énergie attribués à chaque source d'entraînement respective (8) de telle sorte qu'elle soit égale à la puissance maximum de cette source d'entraînement (8); ledit moyen d'établissement de temps de pic (4b) servant à établir, en tant que temps de pic du système asservi, le maximum des valeurs de temps de pic respectives ainsi calculées.

2. Procédé de génération de motifs d'accélération et de décélération pour un système asservi conçu de manière à exercer une interférence dynamique du mouvement d'un axe d'entraînement par rapport à celui d'un autre axe d'entraînement, de telle manière qu'une synchronisation soit atteinte au niveau de points de début d'accélération, de points de pic de vitesse et de points de fin de décélération dans les motifs d'accélération et de décélération pour les axes d'entraînement individuels, ledit procédé comprenant les étapes de :

établissement de paramètres dynamiques spécifiques au système asservi, puis désignation des positions de début et de fin de chaque déplacement par rapport aux paramètres dynamiques, et expression des paramètres dynamiques en tant que fonctions du temps de pic requis pour que la vitesse atteigne son pic dans les motifs d'accélération-décélération ; calcul du temps de pic ; et
génération d'un motif d'accélération relatif à chaque axe d'entraînement de manière à ce que le temps requis pour que la vitesse atteigne son point de pic à partir du point de début d'accélération devienne égal au temps de pic calculé, puis réalisation d'une symétrisation temporelle par rapport audit motif d'accélération afin de générer ainsi un motif de décélération à réflexion temporelle,
caractérisé par :
l'établissement des paramètres dynamiques en analysant dynamiquement le mouvement du système asservi ;
le calcul de l'énergie cinétique, laquelle est requise pour le déplacement, en tant que fonction du temps de pic sur la base des constantes dynamiques et des paramètres dynamiques, et l'attribution de chacun des termes d'énergie dans cette fonction à l'une des sources d'entraînement (8) pour les axes ;
le calcul des valeurs de temps de pic respectives en établissant la somme des termes d'énergie attribués à chaque source d'entraînement respective (8) de telle sorte qu'elle soit égale à la valeur de puissance maximum permise par la source d'entraînement (8) ; et
la sélection, en tant que temps de pic dudit système asservi, du maximum des valeurs de temps de pic ainsi calculées.

# FIG. 1

# FIG. 2

START

(a) SET PARAMETERS
AND CONSTANTS

(b) FIND PEAK TIME Tp
1) CALCULATE ENERGY
EXPRESSIONS
2) PRESCRIBE POWER
DISTRIBUTION
3) COMPUTE Tp VALUE
FOR ARMS
4) DETERMINE Tp VALUE

(c) GENERATE ACCELERATION
AND DECELRATION
PATTERNS
1) GENERATE
ACCELERATION PATTERN
2) GENERATE
DECELERATION PATTERN

END

# FIG. 3

# FIG. 4

# FIG. 5

# FIG. 6

# FIG. 7

# FIG.8

# FIG. 9

# FIG. 10

# FIG. 11

# FIG. 12A

# FIG. 12B